(19) Europäisches Patentamt
European Patent Office
Office européen des brevets

(11) **EP 2 195 679 B1**

(12) **EUROPÄISCHE PATENTSCHRIFT**

(45) Veröffentlichungstag und Bekanntmachung des Hinweises auf die Patenterteilung:
**12.01.2011 Patentblatt 2011/02**

(21) Anmeldenummer: **08785515.1**

(22) Anmeldetag: **12.08.2008**

(51) Int Cl.:
*G01S 7/03* (2006.01)          *H01Q 3/26* (2006.01)

(86) Internationale Anmeldenummer:
**PCT/EP2008/006639**

(87) Internationale Veröffentlichungsnummer:
**WO 2009/033541 (19.03.2009 Gazette 2009/12)**

(54) **ECHTZEITVERZÖGERUNGSSYSTEME MIT GRUPPENANTENNE ZUR RÄUMLICH VERÄNDERBAREN ABSTRAHLCHARAKTERISTIK FÜR ULTRABREITBANDIGE PULSE HÖCHSTER LEISTUNG**

REAL-TIME DELAY SYSTEM WITH GROUP ANTENNA FOR SPATIALLY ALTERABLE IRRADIATION CHARACTERISTIC FOR ULTRA BROADBAND PULSES OF VERY HIGH POWER

SYSTÈMES À RETARD TEMPS RÉEL COMPRENANT UNE ANTENNE RÉSEAU PERMETTANT D'OBTENIR UNE CARACTÉRISTIQUE DE RAYONNEMENT SPATIALEMENT VARIABLE POUR DES IMPULSIONS ULTRA LARGE BANDE DE PUISSANCE TRÈS ÉLEVÉE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **07.09.2007 DE 102007042614**

(43) Veröffentlichungstag der Anmeldung:
**16.06.2010 Patentblatt 2010/24**

(73) Patentinhaber: **Rheinmetall Waffe Munition GmbH 29345 Unterlüss (DE)**

(72) Erfinder:
• **MARKUS, Jung**
  **29358 Eicklingen (DE)**
• **SCHMITZ, Jürgen**
  **38518 Gifhorn (DE)**
• **SCHÜNEMANN, Bernd**
  **29303 Bergen (DE)**
• **WOLLMANN, Gerd-Walter**
  **29229 Celle (DE)**

(74) Vertreter: **Dietrich, Barbara**
  **Thul Patentanwaltsgesellschaft mbH**
  **Rheinmetall Platz 1**
  **40476 Düsseldorf (DE)**

(56) Entgegenhaltungen:
EP-A- 1 431 773          WO-A- 02/054204
US-A- 5 109 203          US-A- 5 313 056
US-A1- 2006 060 074      US-A1- 2006 164 282

US-B1- 7 051 636

• ROTMAN R ET AL: "Wideband RF beamforming: the Rotman lens vs. photonic beamforming" ANTENNAS AND PROPAGATION SOCIETY SYMPOSIUM, 2005. IEEE WASHINGTON, DC, JULY 3 - 8, 2005, PISCATAWAY, NJ : IEEE, US, Bd. 2B, 3. Juli 2005 (2005-07-03), Seiten 23-26, XP010858366 ISBN: 978-0-7803-8883-3
• BUCK T ET AL: "Design Considerations and Technology Assessment of Phased-Array Antenna Systems With RF MEMS for Automotive Radar Applications" 1. Juni 2005 (2005-06-01), IEEE TRANSACTIONS ON MICROWAVE THEORY AND TECHNIQUES, IEEE SERVICE CENTER, PISCATAWAY, NJ, US, PAGE(S) 1968 - 1975 , XP011134692 ISSN: 0018-9480 Zusammenfassung; Abbildungen 1a,1b,2-6
• BRATCHIKOV A N ED - ANONYMOUS: "Photonic Beamforming in Ultra-Wideband Phased Antenna Arrays: Present State and Perspectives" ULTRAWIDEBAND AND ULTRASHORT IMPULSE SIGNALS, THE THIRD INTERNATIONAL CONFERENCE, IEEE, PI, 1. September 2006 (2006-09-01), Seiten 159-164, XP031046678 ISBN: 978-1-4244-0513-8
• "Terror-Abwehr mit High-Tech: HPEM von Rheinmetall gegen Sprengfallen" INTERNET CITATION, [Online] XP002455792 Gefunden im Internet: URL:http://www.rheinmetall-defence.com/ind ex.php?lang=2&fid=3305> [gefunden am 2007-10-19]

## Beschreibung

Die Erfindung betrifft ein elektronisches Richten von Antennenstrahlen bzw. Pulsen mittels mit Ultra- Wideband- (UWB-) Pulsen arbeitende Echtzeitverzögerungsnetzwerke ("true time delay" TTD), d. h., eine elektronische Antennenablenkung mittels TTD- Netzwerk, wie es aus der US 5 109 203 bekannt ist.

Bestimmte Bereiche, z. B. auf einer Straße vor einem Fahrzeug, werden für unterschiedliche Situationen häufig mittels Radar abgescannt, um Informationen zu sammeln und diese zur weiteren Verarbeitung zur Verfügung zu stellen.

In der EP 1 431 773 A2 wird ein Winkel scannendes Radarsystem beschrieben, bei der eine Gruppenantenne vorgesehen ist, die über ein Strahlformungsnetzwerk angesteuert wird. Eine Koppeleinrichtung ermöglicht den Betrieb der Gruppenantenne sowohl für die Sendeals auch die Empfangseinrichtung. Für verschiedene Winkelabschnitte werden separate Empfindlichkeiten eingestellt, um Objekte winkelaufgelöst zu erfassen. Das Radarsystem dient dabei als Fahrzeugassistenz.

Aktive Antennen sind in der Lage, ihre Strahlungscharakteristik elektronisch zu verändern, um Objekte von beweglichen Plattformen, wie von Fahrzeugen aus verfolgen zu können. Bei Antennen mit digitaler Strahlformung können zudem die Antennencharakteristik der Umgebung angepasst und mehrere Strahlungskeulen erzeugt werden, um damit die Verbindung mit mehreren Gegenstationen gleichzeitig aufzubauen sowie Störer durch Nullstellen im Antennendiagramm zu unterdrücken (siehe http://elib.dlr.de/22932/).

Eine Antenne mit elektronischer Ablenkung ist aus der DE 196 38 149 A1 bekannt. Die Ablenkung wird hierbei durch gesteuerte Phasenschieber erreicht. Die Einstellung der Phasenverschiebung ermöglicht, das Antennendiagramm innerhalb eines zweidimensionalen Winkelbreiches in jede gewünschte Richtung zu drehen.

Als so genannte Strahl formende Netzwerke sind die Rotman- Linse oder die Butler- Matrizen (http://scholar.lib.vt.edu/theses/available/etd-04262000-15330030/unrestricted/ch3.pdf bekannt. Die DE 196 38 149 A1 zählt weitere elektromagnetische Linsen auf. Die Rotman-Linse bzw. Butler- Matrizen werden bislang für kontinuierlich sinusförmige bzw. gepulst sinusförmige Hochfrequenzsignale (Pulsradar, CW- Radar) eingesetzt, deren Frequenzbandbreite max. eine Oktave (Z. B. 1- 2GHz) umfasst.

Mit der Entwicklung einer Rotman- Linse bei 94 GHz zur Ansteuerung einer Antennenzeile beschäftigt sich der Beitrag im Internet auf der Internetseite http://copernicus.org/URSI/kh tagung/2000/abstracts/ccc0049.pdf. Die im W- Band bei 94 GHz konzipierte Linse umfasst 13 Eingangstore für einen Winkelbereich von $\pm$ 30˚ in Schritten von 4,8˚ sowie 20 Ausgangstore zur Ansteuerung der 20 Antennenelemente.

Insbesondere bei zeitlich sehr kurzen schnell ansteigenden Pulsen, beispielsweise im bereich einiger 10 bis 100 Picosekunden, ist eine zeitliche Schwankung beim Triggern möglichst unterhalb ¼ der Anstiegszeit notwendig. Dies ist nur bei absolut stabilen Laufzeiten des Systems mit hoher thermischer Stabilität oder dergleichen Aufwand möglich. Weiterhin ist bei einer Pulswiederholrate von beispielsweise 100 kHz eine Steuerung des Strahls von Puls zu Puls mit dieser hohen zeitlichen Auflösung schwer zu realisieren. Wird das Gesamtsystem oder werden die Einzelmodule mechanisch geschwenkt, so ist eine sehr hohe mechanische Winkelgeschwindigkeit notwendig.

Die Erfindung stellt sich die Aufgabe, eine Steuerung einer Strahlungshauptkeule mit sehr genauer räumlicher Auflösung in Zeile und / oder Spalte aufzuzeigen.

Gelöst wird die Aufgabe durch die Merkmale des Patentanspruchs 1. Vorteilhafte Ausführungen sind in den Unteransprüchen aufgelistet.

Um die Reichweite von überlagerten transienten Pulsen lokal zu erhöhen, ist ein Schwenken des Gesamtsystems bzw. des gesendeten elektromagnetischen Feldes notwendig. Es ist so theoretisch möglich, mit n- Elementen in idealer Weise die n- fache Feldstärke zu erreichen. Wird weder der Strahl elektronisch, noch des Gesamtsystem mechanisch geschwenkt, so ist es notwendig, für die n- fache Sende- Feldstärke eine $n^2$-fache Sendeleistung bereit zu stellen. Bei einem modularen Aufbau von Systemen, ist es möglich, über verschiedene Pulszeitfolgen ein so genanntes Beam- Steering durchzuführen.

Bei einem modularen Aufbau von HPEM- Modulen (high power electromagnetics), die auf UWB- Pulsen (d.h., auf transiente Pulse im Bereich einiger Picosekunden bis einige 100 Nanosekunden Pulsdauer) und einem Antennenarray basieren, ist es möglich, über verschiedene Pulszeitfolgen das so genannte Beam- Steering durchzuführen. Aufgrund der Überlagerung der Pulse, die zu unterschiedlichen Zeiten ausgelöst (getriggert) oder auf andere Weise zeitlich unterschiedlich gesendet werden, kommt es zu örtlichen Überhöhungen bzw. Auslöschungen, so dass ein bestimmter Bereich insbesondere vor dem Fahrzeug, welches mit derartigen Modulen bestückt ist, mit einem stärkeren (zusammengesetzten) Puls bestrahlt werden kann. Ohne weiteres Richten der Antennen wird nur durch Zeitverzögerung der UWB- Pulse ein Scannen von oben nach unten, von rechts nach links und umgekehrt ermöglicht.

Der Erfindung liegt ausgehend von diesen Überlegungen die Idee zugrunde, mit einem einzigen Eingangstriggerpuls und einem zwischengeschalteten TTD- Netzwerk je nach gewähltem Eingang der elektromagnetischen Linse über die geometrische Form der Linse phasendefiniert bzw. zeitdefiniert und frequenzunabhängig den Ausgangspuls oder den Triggerpuls zu übertragen. Zur Leistungsmaximierung ist letztere Variante praktisch sinnvoller, da die Leistungsfähigkeit durch Vervielfachung der Pulsgeneratoren / Verstärker unbegrenzt ist. Für eine Antennenzeile 1*n lässt sich dann die Hauptkeule je nach Anzahl der einstellbaren Phasendifferenzen bzw. Zeitdifferenzen in dieselbe Anzahl von Positionen in einer Ebene beeinflussen. Bei den meisten TTD- Netzwerken entspricht die Zahl der Positionen der Anzahl der Eingangstore eines TTD- Netzwerkes. Für ein m*n Array ist die Ausrichtung der Antennenkeule nicht mehr auf die Ebene beschränkt.

Der Vorteil liegt u. a. darin, dass nunmehr die TTD- Netzwerke mit UWB- Signalen betrieben werden, d. h., mittels gepulst transienten Signalen und nicht nur mit sinusförmigen bzw. gepulst sinusförmigen Signalen. Für Hochleistungssysteme sind praktisch unbegrenzte Skalierungen möglich, beispielsweise mit je > 10kV Amplituden. Das TTD- Netzwerk wird dabei im Niederleistungsbereich eingesetzt, elektrische Durchschläge können auch im Hochleistungsfall vermieden werden.

Mit Einsatz des UWB- Systems sind Bandbreiten von einer bis mehrerer Dekaden (z. B. 100 MHz - 10 GHz) mit gaußförmigen Signalen möglich. Vorgesehen ist die Nutzung dieser UWB- Systeme für den Konvoischutz von Fahrzeugen, jedoch nicht darauf zu beschränken. Das System kann neben dem Jamming auch für die Kommunikation genutzt werden.

Anhand eines Ausführungsbeispiels mit Zeichnung soll die Erfindung näher erläutert werden. Es zeigt:

Fig.1    eine erste Variante eines phasendefinierten UWB- Systems,

Fig. 2    eine weitere Variante eines phasendefinierten UWB- Systems.

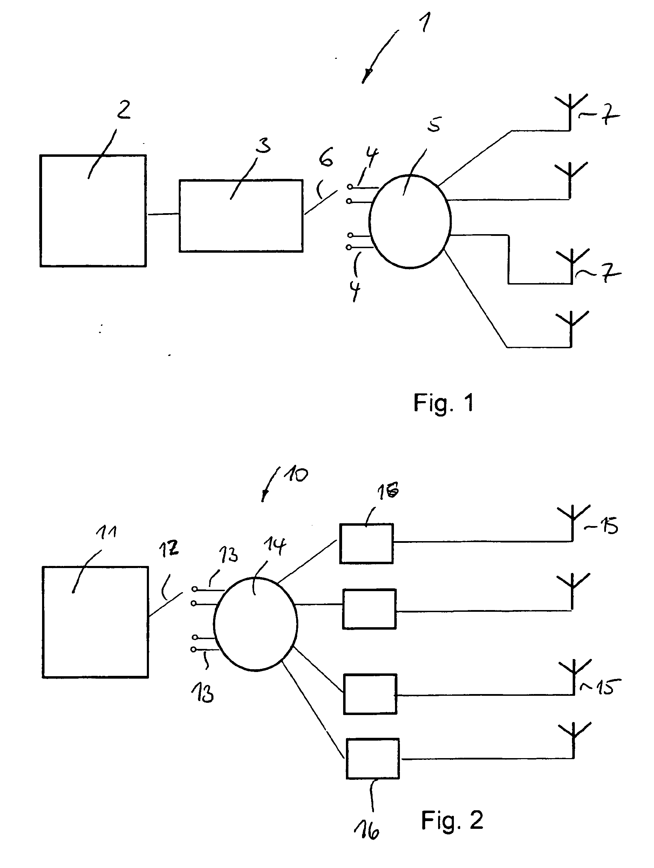

Fig. 1 zeigt eine erste Variante für ein UWB- System 1 (HPEM- Modul) mit wenigstens einem Trigger 2, dem vorzugsweise ein Pulsgenerator 3 nachgeschaltet ist. Dieser ist auf Eingänge 4 eines TTD- Netzwerkes 5 über einen Schalter 6 schaltbar. Ausgangsseitig weist das Netzwerk 5 mehrere Antennen 7 auf. Die Anzahl m der Antennen 7 ist nicht auf die dargestellten vier begrenzt. Die Antennen 7 können zu einer Antennenzeile und diese zu einem Antennenarray zusammengefasst werden.

Fig. 2 zeigt eine weitere Variante für ein UWB- System 10 (HPEM -Modul), welches gleichfalls wenigstens einen Trigger 11 aufweist. In dieser Variante ist der Trigger 11 auf die Eingänge 13 eines TTD- Netzwerkes 14 schaltbar (12). Ausgangsseitig liegen in jedem Zweig zwischen dem Netzwerk 14 und Antennen 15 Pulsgeneratoren 16. Auch hier ist die Anzahl m der Antennen 15 nicht auf die dargestellten vier beschränkt. Die Antennen 15 können zu einer Antennenzeile und diese zu einem Antennenarray zusammengefasst werden.

Im Gegensatz zu den bekannten begrenzten sinusförmigen bzw. gepulst sinusförmigen Signalen ist für das UWB- System 1, 10 ein UWB- Puls vorgesehen. Dieser Puls ist durch

$$s(t) = S \cdot \exp(-k\,t^2)$$

beschreibbar, wobei

S    die Pulsamplitude

k    die Anstiegszeit

bestimmen.

Das Spektrum eines solchen Pulses kann durch die kontinuierliche Fouriertransformation ermittelt werden zu

$$S(f) = S\sqrt{\frac{\pi}{k}}\exp\left(-\frac{\pi^2}{k}f^2\right).$$

Dabei kann S eine Spannungs- oder Feldamplitude in V bzw. V/m sein.

UWB- Pulsgeneratoren (3, 16) erreichen zurzeit Amplituden bis zu mehreren 10 kV mit Anstiegszeiten von weniger als 300 ps, die nach dem Modell berechnet werden kann zu

$$\tau = t_{90\%} - t_{10\%} = \left| \mp \sqrt{\frac{\ln 0.9}{-k}} \pm \sqrt{\frac{\ln 0.1}{-k}} \right|.$$

Die elektrische Feldstärke $\vec{e}_{einzel}(t, \vec{r})$ und somit die Funktion einer einzelnen Antenne 7, 15 lässt sich im Zeitbereich gemäß (Sörgel, W; Waldschmidt, C; Wiesbeck, W.: UWB Antenna Arrays. In: Benedetto, M. G. di; Hirt, W.; Kaiser, T.; Molisch, A.; Oppermann, I.; Porcino, D. (Hrsg.): UWB Communication Systems--A Comprehensive Overview. EURASIP Book Series, Hindawi Publisher, April 2005, ISBN 977-5945-10-0.) durch die Faltungsbeziehung

$$\frac{\vec{e}_{einzel}(t,\vec{r})}{\sqrt{Z_0}} = \frac{1}{2\pi\, c_0\, r} \delta\left(t - \frac{r}{c_0}\right) * \vec{h}_{einzel}(t,\theta,\psi) * \frac{\partial}{\partial t}\frac{u(t)}{\sqrt{Z_C}}$$

beschreiben.

$Z_0$ = 120$\pi$ $\Omega$ ist der Wellenwiderstand des Freiraumes, $Z_C$ die Torimpedanz der Antenne, $u(t)$ die zeitlich abhängige Antenneneingangsspannung, $\vec{h}_{einzel}(t, \theta, \phi)$ die Impulsantwort. Die Distribution $\delta(t - r/c_0)$ charakterisiert die zeitliche Verzögerung zwischen Anregung und ermittelte Feldstärke an einem Ort, die im Wesentlichen vom Abstand $r$ und der Lichtgeschwindigkeit $C_0$ abhängt.

Die Impulsantwort eines uniformen linearen Arrays mit $n$ Antennenelementen, das entlang der y-Achse angeordnet ist, kann mit Hilfe der Faltung

$$\vec{h}_{gesamt}(t, \theta, \psi) = f_{Ar}(t, \vec{r}) * \vec{h}_{einzel}(t, \theta, \psi)$$

bestimmt werden. Für eine Schwenkrichtung $\psi$ in der x-y-Ebene von der Hauptstrahlachse ist dabei der Arrayfaktor im Zeitbereich mit

$$f_{Ar}(t, \psi) = \sum_{i=1}^{n} W_i(t) * \delta(t - \tau_i(\psi))$$

gegeben.

$W_i(t)$ ist die Transferfunktion des $i$-ten Speisenetzwerkes der Einzelantennen, die in der Regel identisch sind. $\tau_i(\psi)$ entspricht der zeitlichen Verzögerung, die das Signal von der Antenne zum Aufpunkt im Fernfeld benötigt.

Somit wird ein Schwenken der abgestrahlten Hauptkeule durch Implementieren einer festen Zeitverzögerung $\Delta\tau$ zwischen den benachbarten Elementen erreicht. Der Punkt der maximalen Feldstärke bei Verwendung einer isotropen Einzelantenne kann derweil abgeleitet werden mit

$$\psi_{max} = \arcsin\left(\frac{\Delta\tau\, c_0}{d}\right).$$

Dabei wird die Zeitverzögerung zwischen zwei benachbarten Elementen geometrisch berechnet. Daraus lässt sich ebenfalls die Empfindlichkeit des Schwenkwinkels in Abhängigkeit der Zeitdifferenz berechnen. Bei z. B. $d$ = 0,3 m und $\Delta\tau$ = 1 ps ergibt sich eine relative Winkeländerung von 0,06 Grad/ps. Bei einer zeitlichen Messgenauigkeit von 50 ps ergibt sich für diese Konfiguration ein Winkelfehler von etwa 3 Grad.

Ein frequenzunabhängiges TTD- Netzwerk auf Leitungsbasis (Mikrostreifen, Bandleitung, etc.), wie eine Rotman- Linse, Umwegphasenschieber, etc., gewährleistet dabei die korrekte Lage der Hauptkeule je nach Schalterstellung am Eingang. Das bedeutet, dass dieses TTD-Netzwerk für N beliebig gewählte Positionen der Hauptkeulen, die korrekten Verzögerungszeiten der Einzelantennen 7, 15 untereinander erzeugt.

Ein Triggersignal gibt den Zeitpunkt der Erzeugung eines UWB- Pulses im Pulsgenerator 3, 16 vor. Je nach Systemvariante werden die Zeitverzögerungen nach dem oder vor dem Pulsgenerator 3, 16 durch das TTD- Netzwerk 5, 14 eingestellt. Beide Systeme 1, 10 ermöglichen ein Schwenken der Hauptkeule auch im schmalbandigen Fall, sofern der Pulsgenerator 3 durch einen Verstärker und der Trigger 2 durch einen schmalbandigen Signalgenerator ersetzt wird.

Das System 10 ermöglicht eine Erhöhung der gesendeten Leistung um Faktor n gegenüber dem System 1. Dabei ist vorausgesetzt, dass das TTD- Netzwerk 14 ein idealer Leistungsteiler von 1 auf n Tore mit der vorgegebenen Zeitverzögerung ist, alle Antennen 15 identisch sind.

Bei verwendeten Pulsgeneratoren 3, 16 mit Spannungsamplituden von mehr als 10 kV ist ein Entwurf eines durchschlagsfesten TTD- Netzwerk 5, 14 erforderlich. Ein Trigger- oder Signalgenerator am Eingang eines jeden Pulsgenerators oder Verstärkers liefert in der Regel Spannungsamplituden von weniger als 100 V, also im Niedervoltbereich. Elektrische Durchschläge innerhalb des TTD- Netzwerkes sind nicht zu erwarten. Ein durchschlagssicheres Design der Antennen ist zu gewährleisten.

**Patentansprüche**

1.  High-power-electromagnetico-Modul (1), HPEM-Modul, mit wenigstens einem Trigger (2), einem dem Trigger (2) nach geschaltetem Pulsgenerator (3), einem true-time-delay-Netzwerk (5) TTD-Netzwerk mit mehreren Eingängen (4) sowie einer Anzahl von Ausgängen, auf welche eine Anzahl (m) von Antennen (7) geführt sind, und einem zwischen Pulsgenerator (3) und dem TTD- Netzwerk (5) befindlichen Schalter(6), wobei das Triggersignal des Triggers (2) den Zeitpunkt der Erzeugung eines UWB- Pulses im Pulsgenerator (3) vorgibt, dieser den UWB- Puls auf einen der Eingänge (4) des TTD- Netzwerkes (5) schaltet und mit dem TTD- Netzwerk (5) eine Zeitverzögerung eingestellt wird, nach welcher die Pulse über die Antennen (7) als Hauptkeule abgegeben werden, **dadurch gekennzeichnet, dass** das TTD- Netzwerk (5, 14) eine elektromagnetische Linse ist und je nach gewähltem Eingang (4, 13) der elektromagnetischen Linse über die geometrische Form der Linse phasendefiniert bzw. zeitdefiniert und frequenzunabhängig der Ausgangspuls oder der Triggerpuls übertragen wird.

2.  High-power-electromagnetics-Modul (10), HPEM-Modul, mit wenigstens einem Trigger (11), einem dem Trigger (11) nach geschaltetem true-time-delay-Netzwerk (14), TTD-Netzwerk mit mehreren Eingängen (13) sowie einer Anzahl von Ausgängen, auf welche eine Anzahl (m) von Antennen (15) geführt sind, einem zwischen dem Trigger (11) und dem TTD- Netzwerk (14) befindlichen Schalter (12), mit je einem zwischen dem TTD- Netzwerk (14) und der jeweiligen Antenne (15) eingebundenen Pulsgenerator (16), wobei das Triggersignal des Triggers (2) auf einen der Eingänge (13) geschaltet wird, mit dem TTD- Netzwerk (5) eine Zeitverzögerung eingestellt wird und danach im jeweiligen Pulsgenerator (16) ein UWB- Puls erzeugt und über die Antennen (15) abgegeben wird, **dadurch gekennzeichnet, dass** das TTD- Netzwerk (5, 14) eine elektromagnetische Linse ist und je nach gewähltem Eingang (4, 13) der elektromagnetischen Linse über die geometrische Form der Linse phasendefiniert bzw. zeitdefiniert und frequenzunabhängig der Ausgangspuls oder der Triggerpuls übertragen wird.

3.  HPEM- Modul nach Anspruch 2, **dadurch gekennzeichnet, dass** das TTD- Netzwerk (14) im Niederleistungsbereich eingesetzt wird.

4.  HPEM- Modul nach Anspruch 2, **dadurch gekennzeichnet, dass** das TTD- Netzwerk (5, 14) ein skalierbares Hochleistungssystem ist.

5.  HPEM- Modul nach einem der Ansprüche 1 bis 4, **dadurch gekennzeichnet, dass** ein Schwenken der Hauptkeule auch im schmalbandigen Fall erfolgen kann, wobei der / die Pulsgenerator(en) (3, 16) durch Verstärker und der Trigger (2) durch einen schmalbandigen Signalgenerator ersetzt wird.

**Claims**

1.  High-power electromagnetic module (1), HPEM module, having at least one trigger (2), a pulse generator (3) which is connected downstream from the trigger (2), a true time-delay network (5), TTD network, having a plurality of inputs (4) and a number of outputs to which a number (m) of antennas (7) are connected, and having a switch (6) which is located between the pulse generator (3) and the TTD network (5), wherein the trigger signal of the trigger (2) presets the time at which a UWB pulse is produced in the pulse generator (3), switches the UWB pulse to one of the inputs (4) of the TTD network (5), and a time delay is set by means of the TTD network (5), after which the pulses are emitted via the antennas (7) as a main lobe, **characterized in that** the TTD network (5, 14) is an electromagnetic lens and, depending on the chosen input (4, 13) of the electromagnetic lens, the output pulse or the trigger pulse is transmitted via the geometric shape of the lens, on a phase-defined basis and/or time-defined basis, and as a function of the frequency.

2. High-power electromagnetic module (1), HPEM module, having at least one trigger (11), a true time-delay network (14), TTD network, which is connected downstream from the trigger (11) having a plurality of inputs (13) and a number of outputs to which a number (m) of antennas (15) are connected, a switch (12) which is located between the trigger (11) and the TTD network (14), having in each case one pulse generator (16), which is connected between the TTD network (14) and the respective antenna (15), wherein the trigger signal of the trigger (2) is switched to one of the inputs (13), the TTD network (5) sets a time delay and, after this, a UWB pulse is produced in the respective pulse generator (16) and is emitted via the antennas (15), **characterized in that** the TTD network (5, 14) is an electromagnetic lens and, depending on the chosen input (4, 13) of the electromagnetic lens, the output pulse or the trigger pulse is transmitted via the geometric shape of the lens, on a phase-defined basis and/or time-defined basis, and as a function of the frequency.

3. HPEM module according to Claim 2, **characterized in that** the TTD network (14) is used in the low-power range.

4. HPEM module according to Claim 2, **characterized in that** the TTD network (5, 14) is a scalable high-powered system.

5. HPEM module according to one of Claims 1 to 4, **characterized in that** the main lobe can also be scanned in the narrowband case, in which case the pulse generator or generators (3, 16) is or are replaced by an amplifier or amplifiers, and the trigger (2) is replaced by a narrow band signal generator.

**Revendications**

1. Module électromagnétique à haute puissance (1), module HPEM, comprenant au moins un déclencheur (2), un générateur d'impulsions (3) branché en aval du déclencheur (2), un réseau à retard en temps réel (5), réseau TTD, comprenant plusieurs entrées (4) ainsi qu'un certain nombre de sorties auxquelles sont acheminées un certain nombre (m) d'antennes (7), et un commutateur (6) qui se trouve entre le générateur d'impulsions (3) et le réseau TTD (5), le signal de déclenchement du déclencheur (2) prédéfinissant le moment de génération d'une impulsion UWB dans le générateur d'impulsions (3), celui-ci commutant l'impulsion UWB sur l'une des entrées (4) du réseau TTD (5) et un retard étant réglé avec le réseau TTD (5) après lequel les impulsions étant délivrées par le biais des antennes (7) sous la forme d'un lobe principal, **caractérisé en ce que** le réseau TTD (5, 14) est une lentille électromagnétique et l'impulsion de sortie ou l'impulsion de déclenchement est transmise par le biais de la forme géométrique de la lentille avec une phase définie ou dans un temps défini et indépendamment de la fréquence, suivant l'entrée (4, 13) sélectionnée de la lentille électromagnétique.

2. Module électromagnétique à haute puissance (10), module HPEM, comprenant au moins un déclencheur (11), un réseau à retard en temps réel (14), réseau TTD, branché en aval du déclencheur (11), comprenant plusieurs entrées (13) ainsi qu'un certain nombre de sorties auxquelles sont acheminées un certain nombre (m) d'antennes (15), un commutateur (12) qui se trouve entre le déclencheur (11) et le réseau TTD (14), avec un générateur d'impulsions (16) à chaque fois intégré entre le réseau TTD (14) et l'antenne (15) respective, le signal de déclenchement du déclencheur (2) étant commuté sur l'une des entrées (13), un retard étant réglé avec le réseau TTD (5) et une impulsion UWB étant ensuite générée dans le générateur d'impulsions (16) correspondant puis délivrée par le biais des antennes (15), **caractérisé en ce que** le réseau TTD (5, 14) est une lentille électromagnétique et l'impulsion de sortie ou l'impulsion de déclenchement est transmise par le biais de la forme géométrique de la lentille avec une phase définie ou dans un temps défini et indépendamment de la fréquence, suivant l'entrée (4, 13) sélectionnée de la lentille électromagnétique.

3. Module HPEM selon la revendication 2, **caractérisé en ce que** le réseau TTD (14) est utilisé dans le domaine des faibles puissances.

4. Module HPEM selon la revendication 2, **caractérisé en ce que** le réseau TTD (5, 14) est un système à haute puissance évolutif.

5. Module HPEM selon l'une des revendications 1 à 4, **caractérisé en ce qu'**un pivotement du lobe principal peut également être effectué dans le cas d'une bande étroite, le/les générateur(s) d'impulsions (3, 16) étant remplacés par un amplificateur et le déclencheur (2) par un générateur de signal à bande étroite.

Fig. 1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5109203 A
- EP 1431773 A2

- DE 19638149 A1

### In der Beschreibung aufgeführte Nicht-Patentliteratur

- UWB Communication Systems--A Comprehensive Overview. **Sörgel, W ; Waldschmidt, C ; Wiesbeck, W. ; UWB Antenna Arrays.** EURASIP Book Series. Hindawi Publisher, April 2005